# FASCICULE DE BREVET EUROPEEN

(11) **EP 0 922 480 B1**
(45) Date de publication et mention de la délivrance du brevet: **23.07.2003**
(21) Numéro de dépôt: 98403029.6
(22) Date de dépôt: 03.12.1998
(51) Int. Cl.: B01D 53/04, B01D 53/047, C01B 23/00

(54) **Procédé de purification de fluides inertes par adsorption sur zeolite LSX et un second adsorbant**
Adsorptionsverfahren zur Reinigung von inerten Fluiden mittels Zeolith LSX und einem zweiten Adsorbens
Adsorption process for the purification of inert fluids on zeolite LSX and a second adsorbant

(30) Priorité: 05.12.1997 FR 9715410
(43) Date de publication de la demande: 16.06.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gary, Daniel, 78180 Montigny le Bretonneux (FR); Lardeau, René, 91160 Saulx les Chartreux (FR)
(74) Mandataire: Pittis, Olivier

(56) Documents cités:
- EP-A- 0 646 543
- EP-A- 0 662 595
- EP-A- 0 667 183
- US-A- 3 996 028
- US-A- 5 268 023
- DATABASE WPI Section Ch, Week 9420 Derwent Publications Ltd., London, GB; Class E36, AN 94-159536 XP002076552 ANDRECOVICH M. J.: & AU 47537 93 A (BOC GROUP INC) , 14 avril 1994

## Description

La présente invention se rapporte à un procédé de purification de fluides inertes, en particulier d'argon ou d'hélium.

Les fluides inertes, tels l'argon, le krypton, le xénon et l'hélium, sont de plus en plus utilisés dans l'industrie électronique.

De ce fait, il existe une demande croissante en fluides inertes ultra-purs, en particulier l'argon et l'hélium, c'est-à-dire sensiblement exempts des impuretés qu'ils contiennent, telles les impuretés de type oxygène (O₂), monoxyde de carbone (CO), azote (N₂), dioxyde de carbone (CO₂), hydrogène (H₂) et hydrocarbures (méthane...).

Il existe de nombreux documents faisant état de la purification de fluides inertes, en particulier de la purification d'argon liquide ou gazeux en ses impuretés azote et oxygène, lesquels peuvent se retrouver dans l'argon à des concentrations variables selon leur voie de production, à savoir jusqu'à 1000 ppb pour l'oxygène et de 500 à 2 000 ppb pour l'azote.

On peut citer, notamment, les documents JP-A-58187777, JP-A-59223203, JP-A-7138007, JP-A-3164410, JP-A-5461091, AU-A-659759, US-A-5204075, EP-A-606848, US-A-5419891, US-A-5159816, EP-A-514163, US-A-4983194 et US-A-3928004.

'Selon ces documents, l'élimination des impuretés N₂ et O₂ contenues dans l'argon est généralement effectuée par adsorption sur une zéolite de type X, A, mordénite ou chabazite, échangée ou non-échangée par des cations, tels les cations Li, K, Ca, Sr, Ba, Mg....

Cependant, ces différents procédés de purification de fluides inertes, en particulier d'argon, ne peuvent être considérés comme étant pleinement satisfaisants étant donné qu'en général, ils ne sont pas adaptés à l'obtention, de fluides ultra-purs utilisables directement dans le domaine électronique.

En effet, les spécifications de l'industrie électronique requièrent des fluides inertes sensiblement exempts de toutes leurs impuretés majeures, telles les impuretés N₂, O₂, et hydrocarbures dans le cas de l'argon, c'est-à-dire contenant une teneur maximale en chacune desdites impuretés de l'ordre de 1 ppb.

Actuellement, la plupart des procédés connus ne permettent d'obtenir des fluides inertes', en particulier d'argon, que partiellement épurés, c'est-à-dire contenant plus de 100 ppb d'impuretés notamment N₂ et O₂ et, habituellement plus de 1 ppm d'impuretés O₂ et N₂.

Or, de telles teneurs en impuretés ne sont pas admissibles dans le domaine électronique car ces impuretés sont susceptibles de réagir avec les matériels et les composants électroniques, tels les circuits imprimés, et de conduire à une dégradation de ceux-ci.

Par ailleurs, le document US-A-5,268,023 décrit un procédé utilisant un adsorbant de type zéolite LSX permettant d'éliminer l'azote d'un flux de gaz, en particulier d'air. Toutefois, l'oxygène présent dan le flux de gaz n'est pas arrêté par ce procédé.

De même, le document EP-A-667183 enseigne un procédé utilisant un adsorbant de type zéolite X ou LSX permettant d'éliminer uniquement l'azote d'un flux de gaz, en particulier d'air. Là encore, l'oxygène n'est pas arrêté.

En outre, le problème de la purification des fluides inertes en leurs impuretés hydrocarbures, en particulier le méthane (CH₄), n'a jusqu'alors pas ou incomplètement été résolu.

Or, les impuretés de type hydrocarbures se retrouvent dans les fluides inertes, en particulier dans l'argon, notamment l'argon produit à partir d'un procédé combinant une distillation cryogénique et une déoxygènation effectuée à chaud par catalyse en présence d'hydrogène industriel, lequel hydrogène contient souvent des traces d'impuretés de type CH₄, à des teneurs pouvant atteindre 400 ppb, ainsi que l'ont montré des analyses effectuées sur site de production, c'est-à-dire à des teneurs pouvant être comparables à la teneur en impuretés oxygène, lequel oxygène est considéré avec l'azote comme étant un polluant majeur de l'argon.

De là, le but de la présente invention est de proposer un procédé, de préférence PSA (Pressure Swing Adsorption) ou TSA (Temperature Swing Adsorption), efficace permettant d'obtenir un fluide inerte, en particulier l'argon, substantiellement exempt de ses impuretés majeures, à savoir O₂, N₂ et hydrocarbures, c'est-à-dire contenant au plus environ 1 ppb en lesdites impuretés, lequel procédé soit de mise en oeuvre simple et de coût raisonnable.

L'invention concerne alors un procédé de purification d'un fluide inerte en l'une au moins de ses impuretés azote (N₂), oxygène (O₂), le dioxyde de carbone (CO₂), le monoxyde de carbone (CO) et hydrocarbures, dans lequel :
(a) on élimine au moins une desdites impuretés au moyen d'un premier adsorbant de type zéolite X ayant un rapport silice sur aluminium inférieur ou égal à 1.15,
(b) on élimine au moins une partie des impuretés O₂ au moyen d'un second adsorbant choisi parmi les oxydes métalliques poreux et la clinoptilolite échangée ou non,
(c) on récupère un fluide inerte purifié contenant au plus 1 ppb environ d'impuretés.

Une telle zéolite est habituellement appelée LSX (pour Low Silica X) ou zéolite "pauvre" en silice.

Selon le cas, le procédé de l'invention peut comprendre l'une ou plusieurs des caractéristiques suivantes:
- la zéolite X, de type faujasite, a un rapport silice sur aluminium inférieur ou égal à 1.10, de préférence de l'ordre de 1;
- l'adsorbant est une zéolite X ou LSX contenant au moins 10 % de cations métalliques de même nature ou de nature différente, de préférence au moins 50%;
- les cations sont choisis dans le groupe formé par les métaux alcalins (Li, K...), les métaux alcalino-terreux (Ca, Sr, Mg...) et les métaux de transition (Cu, Ag, Au, Zn...) ou leurs mélanges, de préférence des cations Ca ou Ag;
- l'élimination des impuretés est réalisée à une température comprise entre -187°C et -135°C, de préférence entre -186°C et -146°C;
- la zéolite X contient au moins 70% de cations calcium, de préférence de 75% à 95%;
- la zéolite X contient de 5% à 95% de cations calcium et de 95% à 5% de cations lithium, de préférence de 80% à 95% de cations lithium;
- la zéolite contient, en outre, des cations potassium et/ou sodium, de préférence de 0% à 10% de cations potassium et/ou de 1 à 20% de cations sodium;
- l'élimination des impuretés est réalisée à une pression comprise entre 10⁵ Pa et 3.10⁶ Pa, de préférence entre 10⁵ Pa et 1,7.10⁶ Pa;
- lesdits premier adsorbant et second adsorbant sont insérés au sein d'un même adsorbeur;
- on récupère un fluide inerte purifié contenant au plus 1 ppb environ d'impuretés;
- le fluide inerte est choisi parmi l'argon, le néon, le krypton, le xénon, l'hélium...;
- il comprend une étape de régénération d'au moins un adsorbant par un gaz inerte et/ou d'un mélange gazeux réducteur.

Ainsi, lorsque l'adsorbeur ne contient qu'un lit de zéolite LSX, on peut effectuer une régénération de ce lit au moyen d'un gaz inerte, tel l'azote à température ambiante ou réchauffé à une température comprise entre 100°C et 200°C, suivi d'un balayage final à l'argon épuré à température ambiante ou également réchauffé. Par contre, lorsque l'adsorbeur contient, en outre, un lit de particules d'oxydes métalliques, telle une hopcalite, il convient alors de procéder également à une régénération de ses particules d'hopcalite à l'aide d'un balayage de celles-ci par un fluide réducteur, tel un mélange gazeux contenant de l'hydrogène, par exemple 2% d'hydrogène dans l'azote, suivi d'un balayage final à l'argon.

Toutefois, lorsqu'on procède à un tel balayage avec un gaz réducteur, on veille à éviter ou à minimiser les contacts entre ce gaz réducteur et la zéolite LSX échangée avec un métal de transmission, tel l'argent ou le cuivre, afin d'éviter d'en altérer les propriétés intrinsèques, à savoir notamment la sélectivité et la capacité d'adsorption de cette zéolite LSX échangée. Pour ce faire, il est préférable d'introduire le gaz réducteur en aval du lit de zéolite LSX échangée, lorsque l'on souhaite régénérer à contre-courant, ou, au contraire, de l'extraire avant son entrée en contact avec le lit de zéolite LSX, lorsque l'on régénère à co-courant, notamment par le biais d'une purge judicieusement située entre les deux lits, ainsi que décrit dans US-A-4579723.

De préférence, on applique la présente invention à l'épuration d'argon liquide, diphasique ou gazeux très froid, par exemple ayant une température supérieure d'environ 30°C à son point d'ébullition.

Une installation susceptible de mettre en oeuvre le procédé susmentionné comprenant des moyens d'alimentation en fluide à épurer et au moins un adsorbeur contenant au moins un lit de particules d'au moins un adsorbant est aussi décrite.

Dans un premier mode de réalisation, l'adsorbeur contient au moins un premier lit d'adsorbant de type LSX destiné à éliminer au moins les impuretés CH₄ et N2 et un second lit d'adsorbant de type hopcalite destiné à éliminer au moins une partie des impuretés O₂.

Les deux lits d'adsorbants de natures différentes peuvent être, selon le cas, installés l'un sur l'autre en étant séparés uniquement par une grille ou alors espacés l'un de l'autre par un espace vide, c'est-à-dire d'une hauteur donnée ou zone de redistribution, tel que représenté dans le document US-A-4579723, lorsque la zéolite est échangée par un métal de transition.

Dans un deuxième mode de réalisation, l'adsorbeur contient un lit unique comportant un mélange de particules d'adsorbants de types LSX et hopcalite.

Avantageusement, on place en aval de chaque adsorbeur, un moyen de filtration mécanique, tel un filtre métallique ou céramique, de manière à retenir les fines particules ou poussières induites par frottement/usure des billes d'adsorbant.

Le procédé de l'invention permet d'obtenir des fluides inertes, en particulier de l'argon, ultra-purs sensiblement exempts de leurs impuretés et répondant aux spécifications de l'industrie électronique, c'est-à-dire contenant moins d'environ 1 ppb en lesdites impuretés.

L'invention va maintenant être illustrée à l'aide d'exemples donnés à titre illustratif, mais non limitatif.

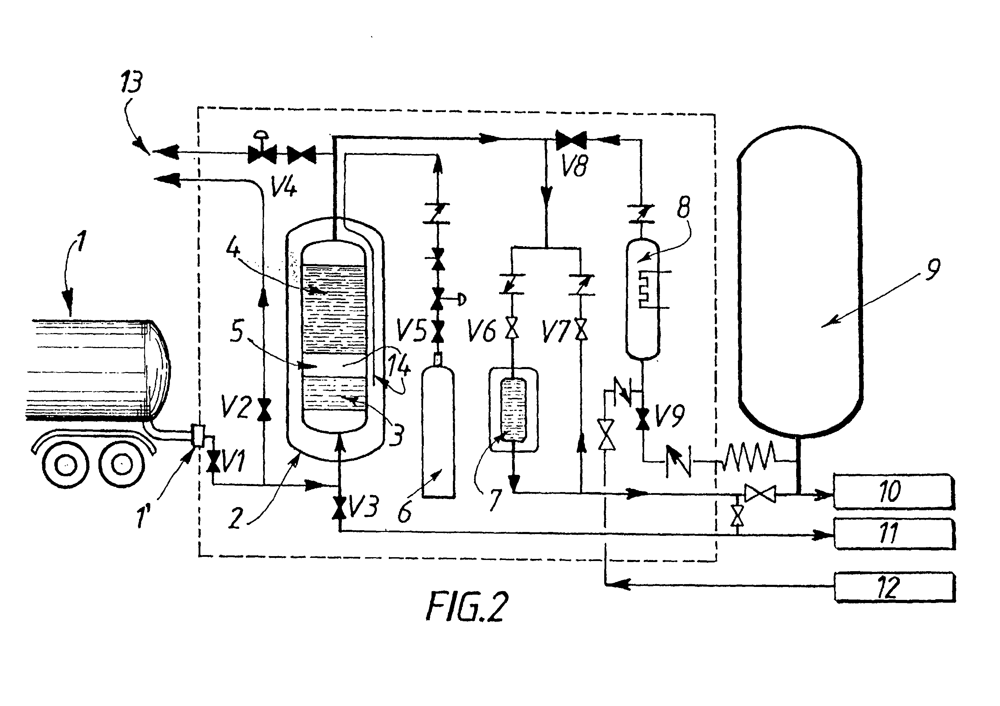

La figure 2 représente un dispositif de purification de fluide inerte à l'état liquide, tel de l'argon liquide, susceptible de mettre en oeuvre le procédé selon l'invention.

Plus précisément, on voit sur la figure 2, un camion contenant le fluide inerte à purifier, ici de l'argon liquide impur, lequel camion 1 est relié via un flexible de déchargement 1' à un dispositif de purification de fluide selon l'invention; le passage du fluide du flexible 1' audit dispositif étant commandé par une vanne V1.

Le dispositif de la figure 2 comprend un adsorbeur 2 où est réalisée la purification de l'argon liquide impur, lequel adsorbeur 2 contient un premier lit 3 d'oxyde métallique poreux, telle une hopcalite, destiné à éliminer au moins les impuretés de type oxygène et un deuxième lit 4 de zéolite LSX destiné à éliminer les impuretés non arrêtées par le premier lit 3 d'oxyde métallique poreux; les lits 3 et 4 étant séparés par une zone 5 de redistribution, c'est-à-dire que les lits 3 et 4 sont placés à une distance donnée l'un de l'autre correspondant à ladite zone 5 de redistribution.

L'argon liquide purifié dans l'adsorbeur 2 est ensuite évacué, via des canalisations, jusqu'à des moyens de filtration 7, ici un fritté métallique, destiné à éliminer les poussières et fines particules susceptibles de résulter d'une usure par frottement des particules d'adsorbants situés dans l'adsorbeur 2.

L'argon liquide ultra-pur débarrassé des éventuelles poussières qui s'y trouvent est alors acheminé via des canalisations vers un site utilisateur 10 ou le cas échéant stocké dans une capacité de stockage 9.

De manière classique, préalablement au début de déchargement du camion 1, on veille à purger le flexible 1' et les parties de canalisations situées entre les vannes V1, V2 et V3 vers l'atmosphère 11 et 13.

Lors de la régénération de l'adsorbant, on procède comme décrit dans les exemples ci-après, c'est-à-dire par balayage du lit de zéolite LSX 4 par un flux de fluide inerte à une température supérieure à 100°C, par exemple de l'argon liquide vaporisé issu de la capacité 9 ou de l'azote liquide ou gazeux issu d'une capacité de stockage 12, ledit fluide inerte étant réchauffé à une température supérieure à 100°C dans un réchauffeur 8, préalablement à son introduction dans l'adsorbeur 2 en vue d'y régénérer le lit de zéolite LSX 4.

En outre, la régénération du lit d'hopcalite est réalisée à l'aide d'un fluide réducteur, tel un mélange gazeux d'hydrogène et d'azote (à 2% d'hydrogène); l'hydrogène étant issu d'une capacité de stockage 6, puis introduit dans l'adsorbeur 2 au niveau de la zone de redistribution 5 par le biais d'un piquage 14 adéquat, pour être mélangé au fluide inerte élué de la charge de zéolite LSX.

Lors de la régénération dudit lit 3 d'hopcalite, on évite autant que faire ce peut le contact entre le gaz réducteur (H₂/N₂) et le lit de zéolite LSX.

Il est à noter que la régénération des deux lits 3 et 4 est réalisée à contre-courant; le fluide de purge étant évacué vers l'atmosphère via des canalisations et des moyens de purge 11 et V3.

Après régénération des deux lits d'adsorbants 4 et 3, l'adsorbeur 2 est remis en condition d'épuration grâce à un balayage à contre courant de celui-ci par de l'argon liquide vaporisé issu de la capacité 9.

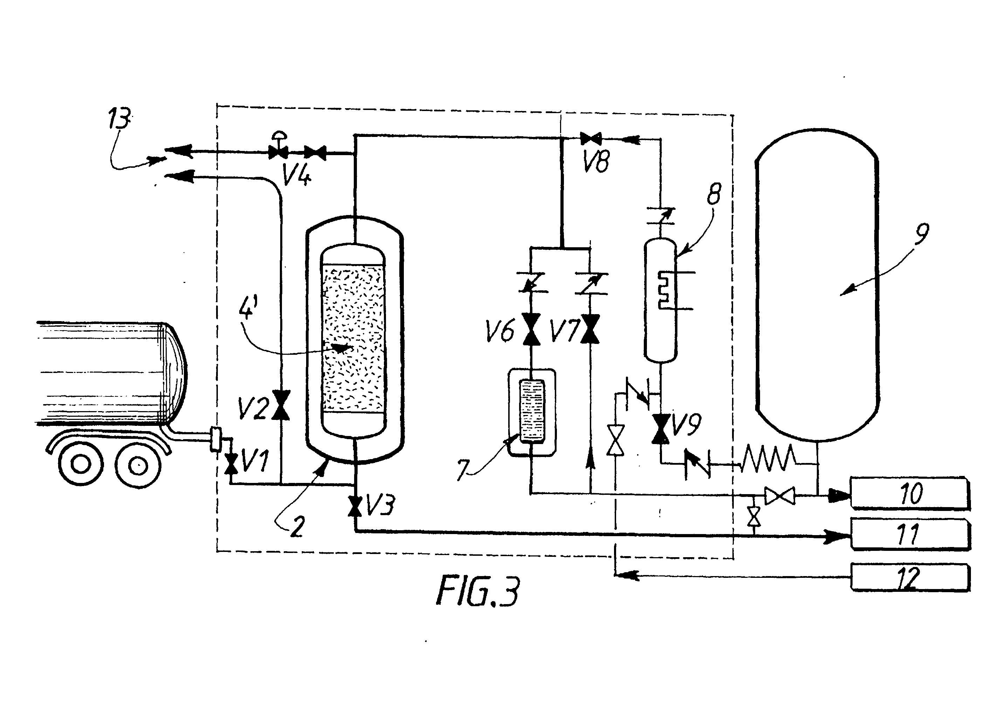

La figure 3 représente, quant à elle, une installation industrielle sensiblement identique à celle de la figure 2, à l'exception du fait que l'installation de la figure 3 comprend un adsorbeur 2 ne contenant qu'un lit unique 4' de zéolite de type LSX.

En outre, on constate que la ligne de piquage 14, la zone de redistribution 5 et la source d'hydrogène 6 ont, dans ce cas, disparu.

Les autres parties du dispositif étant sensiblement identiques à celles de la figure 2, celles-ci ne seront pas redétaillées ci-après.

Bien que les figures 2 et 3 concernent des dispositifs d'épuration d'argon sous forme liquide, des dispositifs analogues ou identiques pourraient être réalisés pour épurer de l'argon ou un autre fluide inerte, tel notamment l'hélium, sous forme liquide, gazeux ou diphasique par exemple.

Ainsi, il serait possible d'incorporer entre l'adsorbeur 2 et la vanne V1 un ou plusieurs échangeurs thermiques destinés à vaporiser l'argon liquide et obtenir ainsi de l'argon gazeux lequel serait subséquemment épuré dans l'adsorbeur 2, dans le cas où l'on souhaiterait procéder à une épuration d'argon gazeux.

Par ailleurs, il est également possible d'avoir non pas un, mais deux ou plus adsorbeurs 2, fonctionnant en parallèle, de sorte que pendant que l'un des adsorbeurs est en phase de production, c'est-à-dire de purification, l'autre se trouve en phase de régénération.

Dans les exemples ci-après, les analyses sont effectuées avec un analyseur de type APIMS (Atmospheric Pressure Ion Mass Spectrometry), dont les seuils de détection sont les suivants: environ 0,05 ppb pour CO, environ 0,01 ppb pour CH₄, environ 0,005 ppb pour O₂, environ 0,001 ppb pour CO₂ et environ 1 ppb pour N₂.

### Exemple 1

De l'argon gazeux est produit par un procédé mixte combinant une distillation cryogénique de l'air et un procédé déoxo.

Une analyse de l'argon gazeux ainsi produit montre que celui-ci contient environ 350 ppb de CH₄, 1 400 ppb de N₂ et 400 ppb de O₂ en tant qu'impuretés; celui-ci est ensuite artificiellement pollué par 200 ppb de CO.

L'argon gazeux impur est ensuite soumis à une purification par passage dudit argon impur successivement à travers:
- un premier lit de zéolite LSX échangée à 90% au calcium ayant un rapport Si/Al = 1 (CaLSX) destiné à arrêter au moins les impuretés CH₄, N₂ et CO;
- un deuxième lit d'hopcalite permettant d'éliminer les impuretés O₂.

Cette purification est effectuée à -160°C environ et à une pression de l'ordre de 7.10⁵ Pa.

Les deux lits d'adsorbants sont placés au sein d'un même adsorbeur ou bouteille.

L'argon ainsi purifié est récupéré et soumis à de nouvelles analyses, lesquelles montrent que la teneur de l'argon en ses impuretés CH₄, N₂, CO et O₂ est au plus d'environ 1 ppb.

### Exemple 2

L'exemple 2 est analogue à l'exemple 1, à l'exception du fait qu'il a été mené sur de l'argon liquide et que la bouteille, c'est-à-dire l'adsorbeur, contient, cette fois, un seul lit constitué d'un mélange de particules d'adsorbants de natures différentes (mélange LSX/hopcalite).

Dans ce cas, la température de purification est de -163°C et la pression de 7.10⁵ Pa.

Les résultats obtenus sont identiques à ceux de l'exemple 1, démontrant ainsi l'efficacité du procédé de l'invention dans l'épuration de l'argon liquide ou gazeux en les impuretés susmentionnées.

### Exemple 3

Cet exemple est analogue à l'exemple 2 mais concerne l'épuration de krypton liquide et sous-refroidi contenant les impuretés suivantes: 500 ppb de O₂, 200 ppb de CO et 500 ppb de CH₄.

L'épuration du krypton liquide pollué est effectuée à une température de -153°C et à une pression de 7.10⁵ Pa, par passage dudit krypton au travers d'un double lit (LSX + hopcalite).

On récupère du krypton contenant moins de 2 ppb de O₂, CO et CH₄, c'est-à-dire une quantité d'impuretés inférieure au seuil de détection des analyseurs utilisés (analyseur de type OSK pour O₂ et analyseur RGA5 pour le CO et le CH₄: seuils détection < 2 ppb).

### Exemple 4

De l'argon liquide sous-refroidi est purifié à une température de l'ordre de -185°C et à une pression de 8.10⁵ Pa.

L'argon non purifié, c'est-à-dire avant purification, contient environ 100 ppb de CO, 500 ppb de O₂, 100 ppb de CO₂, 500 ppb de CH₄ et 2 000 ppb de N₂.

Le procédé de purification met en oeuvre un lit de zéolite LSX échangé à 90% par des cations calcium, et un lit d'hopcalite, c'est-à-dire un mélange d'oxydes de cuivre et de manganèse; les deux lits étant incorporés au sein d'un même adsorbeur, mais séparés d'une hauteur d'environ 10 cm, en tant que zone de redistribution, ainsi que représenté sur la figure 2.

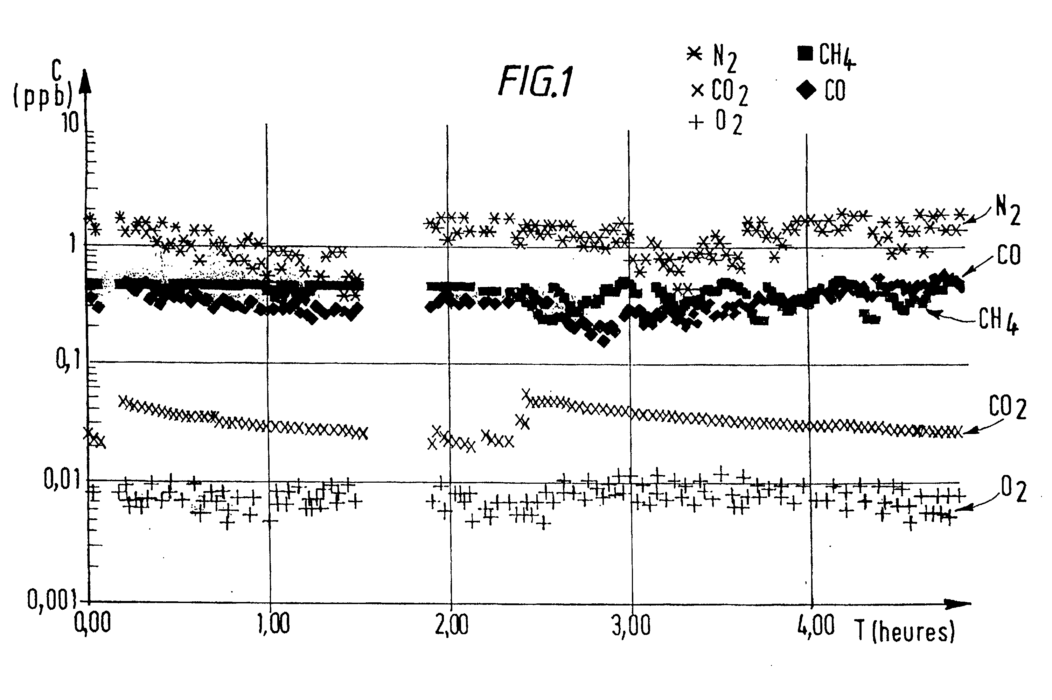

Les résultats obtenus sont représentés sur la figure 1, laquelle donne, en ordonnées, la teneur (C) des impuretés N₂, CO₂, O₂, CO et CH₄ (en ppb) dans l'argon liquide après purification et, en abscisses, la durée (T) du procédé de purification (en heures).

Il apparaît clairement que le procédé de l'invention permet de garantir, pendant au moins 5 heures consécutives, une teneur de l'argon liquide en lesdites impuretés de l'ordre d'environ 1 ppb, ce qui correspond tout à fait aux spécifications de l'industrie électronique.

### Exemple 5

Des essais menés dans des conditions identiques à celles de l'exemple 4, réalisés sur de l'argon liquide contenant environ 200 ppb de CO, 1 000 ppb de O₂, 1 000 ppb de CH₄, 100 ppb de CO₂ et 4 000 ppb de N₂ ont conduit, comme dans l'exemple 4, à de l'argon liquide purifié contenant au plus environ 1 ppb desdites impuretés.

### Exemple 6

Après purification, l'adsorbeur utilisé dans les exemples 4 et 5 a été soumis à régénération à une température de 200 à 250°C et à pression atmosphérique, de la manière suivante:
a) balayage des lits d'adsorbants par un gaz inerte, tel l'azote;
b) balayage du lit d'hopcalite par un mélange H₂/N₂ (2% H₂) de sorte de réduire l'oxyde métallique;
c) balayage par un gaz inerte, tel l'azote, pour purger l'hydrogène résiduel;
d) balayage par de l'argon gazeux, précédemment, purifié pour refroidir et reconditionner l'adsorbeur.

Il est à noter que, lorsqu'on met en oeuvre que de la zéolite LSX, la régénération du lit de zéolite LSX peut s'effectuer à une température plus basse, par exemple à température ambiante, et à pression atmosphérique avec balayage par un fluide inerte et éventuellement balayage et purge finale à l'argon gazeux.

## Revendications

1. Procédé de purification d'un fluide inerte en l'une au moins de ses impuretés azote (N₂), oxygène (O₂), le dioxyde de carbone (CO₂), le monoxyde de carbone (CO) et hydrocarbures, dans lequel :
(a) on élimine au moins une desdites impuretés au moyen d'un premier adsorbant de type zéolite X ayant un rapport silice sur aluminium inférieur ou égal à 1.15,
(b) on élimine au moins une partie des impuretés O₂ au moyen d'un second adsorbant choisi parmi les oxydes métalliques poreux et la clinoptilolite échangée ou non,
(c) on récupère un fluide inerte purifié contenant au plus 10 ppb environ d'impuretés.

2. Procédé selon la revendication 1, **caractérisé en ce que** la zéolite X a un rapport silice sur aluminium inférieur ou égal à 1.10, de préférence de l'ordre de 1.

3. Procédé selon l'une des revendications 1 ou 2, **caractérisé en ce que** l'adsorbant est une zéolite X ou LSX contenant au moins 10 % de cations de même nature ou de nature différente, de préférence au moins 50%.

4. Procédé selon l'une des revendications 1 à 3, **caractérisé en ce que** les cations sont choisis dans le groupe formé par le calcium, l'argent, le cuivre, le strontium, le baryum, le lithium, l'or, le zinc, le potassium, le sodium, le magnésium ou leurs mélanges.

5. Procédé selon l'une des revendications 1 à 4, **caractérisé en ce que** la zéolite X contient au moins 70% de cations calcium, de préférence de 75% à 95%.

6. Procédé selon l'une des revendications 1 à 4, **caractérisé en ce que** la zéolite X contient de 5% à 95% de cations calcium et de 95% à 5% de cations lithium, de. préférence de 80% à 95% de cations lithium.

7. Procédé selon l'une des revendications 5 ou 6, **caractérisé en ce que** la zéolite contient, en outre, des cations potassium et/ou sodium, de préférence de 0% à 10% de cations potassium et/ou de 1 à 20% de cations sodium.

8. Procédé selon l'une des revendications 1 à 7, **caractérisé en ce qu'**au moins une partie des impuretés O₂ est éliminée au moyen d'une hopcalite.

9. Procédé selon l'une des revendications 1 à 8, **caractérisé en ce que** l'élimination des impuretés est réalisée à une température comprise entre -187°C et -135°C.

10. Procédé selon l'une des revendications 1 à 9, **caractérisé en ce que** l'élimination des impuretés est réalisée à une pression comprise entre 10⁵ Pa et 3.10⁶ Pa.

11. Procédé selon l'une des revendications 1 à 10, **caractérisé en ce que** lesdits premier adsorbant et second adsorbant sont insérés au sein d'un même adsorbeur.

12. Procédé selon l'une des revendications 1 à 11, **caractérisé en ce qu'**on récupère un fluide inerte purifié contenant au plus 1 ppb environ d'impuretés.

13. Procédé selon l'une des revendications 1 à 12, **caractérisé en ce que** le fluide inerte est choisi parmi l'argon, le néon, le krypton, le xénon et l'hélium.

14. Procédé selon l'une des revendications 1 à 13, **caractérisé en ce qu'**il comprend une étape de régénération d'au moins un adsorbant par un gaz inerte et/ou un gaz réducteur.

## Patentansprüche

1. Verfahren zur Befreiung eines Inertfluids von mindestens einer der darin enthaltenen Verunreinigungen Stickstoff (N₂), Sauerstoff (O₂), Kohlendioxid (CO₂), Kohlenmonoxid (CO) und Kohlenwasserstoffen, bei dem man:
(a) mindestens eine der Verunreinigungen mit Hilfe eines ersten Adsorptionsmittels vom Typ Zeolith X mit einem Siliciumoxid/Aluminium-Verhältnis kleiner gleich 1,15 abtrennt,
(b) mindestens einen Teil der O₂-Verunreinigungen mit Hilfe eines zweiten, unter porösen Metalloxiden und gegebenenfalls ausgetauschtem Clinoptilolith ausgewählten Adsorptionsmittels abtrennt und
(c) ein gereinigtes Inertfluid mit höchstens ungefähr 10 ppb Verunreinigungen zurückgewinnt.

2. Verfahren nach Anspruch 1, **dadurch gekennzeichnet, daß** der Zeolith X ein Siliciumoxid/Aluminium-Verhältnis kleiner gleich 1,10 und vorzugsweise etwa 1 aufweist.

3. Verfahren nach Anspruch 1 oder 2, **dadurch gekennzeichnet, daß** es sich bei dem Adsorptionsmittel um einen Zeolith X oder LSX mit mindestens 10% Kationen gleicher oder verschiedener Art, vorzugsweise mindestens 50%, handelt.

4. Verfahren nach einem der Ansprüche 1 bis 3, **dadurch gekennzeichnet, daß** die Kationen aus der Gruppe bestehend aus Calcium, Silber, Kupfer, Strontium, Barium, Lithium, Gold, Zink, Kalium, Natrium, Magnesium oder Mischungen davon stammen.

5. Verfahren nach einem der Ansprüche 1 bis 4, **dadurch gekennzeichnet, daß** der Zeolith X mindestens 70% Calciumkationen, vorzugsweise 75% bis 95%, enthält.

6. Verfahren nach einem der Ansprüche 1 bis 4, **dadurch gekennzeichnet, daß** der Zeolith X 5% bis 95% Calciumkationen und 95% bis 5% Lithiumkationen, vorzugsweise 80% bis 95% Lithiumkationen, enthält.

7. Verfahren nach Anspruch 5 oder 6, **dadurch gekennzeichnet, daß** der Zeolith außerdem Kaliumund/oder Natriumkationen, vorzugsweise 0% bis 10% Kaliumkationen und/oder 1 bis 20% Natriumkationen, enthält.

8. Verfahren nach einem der Ansprüche 1 bis 7, **dadurch gekennzeichnet, daß** man mindestens einen Teil der O₂-Verunreinigungen mit Hilfe eines Hopcalits abtrennt.

9. Verfahren nach einem der Ansprüche 1 bis 8, **dadurch gekennzeichnet, daß** man die Abtrennung der Verunreinigungen bei einer Temperatur zwischen -187°C und -135°C durchführt.

10. Verfahren nach einem der Ansprüche 1 bis 9, **dadurch gekennzeichnet, daß** man die Abtrennung der Verunreinigungen bei einem Druck zwischen 10⁵ Pa und 3.10⁶ Pa durchführt.

11. Verfahren nach einem der Ansprüche 1 bis 10, **dadurch gekennzeichnet, daß** man das erste Adsorptionsmittel und das zweite Adsorptionsmittel in denselben Adsorber einträgt.

12. Verfahren nach einem der Ansprüche 1 bis 11, **dadurch gekennzeichnet, daß** man ein gereinigtes Inertfluid mit höchstens ungefähr 1 ppb Verunreinigungen zurückgewinnt.

13. Verfahren nach einem der Ansprüche 1 bis 12, **dadurch gekennzeichnet, daß** man das Inertfluid unter Argon, Neon, Krypton, Xenon und Helium auswählt.

14. Verfahren nach einem der Ansprüche 1 bis 13, **dadurch gekennzeichnet, daß** man mindestens ein Adsorptionsmittel mit einem Inertgas und/oder einem reduzierenden Gas regeneriert.

## Claims

1. Process for purifying an inert fluid with respect to at least one of its impurities nitrogen (N₂), oxygen (O₂), carbon dioxide (CO₂), carbon monoxide (CO) and hydrocarbons, in which
(a) at least one of the said impurities is removed using a first adsorbent of the X zeolite type having a silica to aluminium ratio less than or equal to 1.15,
(b) at least some of the O₂ impurities are removed using a second adsorbent selected from porous metal oxides and optionally exchanged clinoptilolite,
(c) a purified inert fluid containing at most approximately 10 ppb of impurities is recovered.

2. Process according to Claim 1, **characterized in that** the X zeolite has a silica to aluminium ratio less than or equal to 1.10, preferably of the order of 1.

3. Process according to one of Claims 1 and 2, **characterized in that** the adsorbent is an X or LSX zeolite containing at least 10% of cations of the same nature or of different nature, preferably at least 50%.

4. Process according to one of Claims 1 to 3, **characterized in that** the cations are selected from the group formed by calcium, silver, copper, strontium, barium, lithium, gold, zinc, potassium, sodium, magnesium or mixtures thereof.

5. Process according to one of Claims 1 to 4, **characterized in that** the X zeolite contains at least 70% of calcium cations, preferably from 75% to 95%.

6. Process according to one of Claims 1 to 4, **characterized in that** the X zeolite contains from 5% to 95% of calcium cations and from 95% to 5% of lithium cations, preferably from 80% to 95% of lithium cations.

7. Process according to one of Claims 5 and 6, **characterized in that** the zeolite furthermore contains potassium and/or sodium cations, preferably from 0% to 10% of potassium cations and/or from 1% to 20% of sodium cations.

8. Process according to one of Claims 1 to 7, **characterized in that** at least some of the O₂ impurities are removed using a hopcalite.

9. Process according to one of Claims 1 to 8, **characterized in that** the impurities are removed at a temperature of between -187°C and -135°C.

10. Process according to one of Claims 1 to 9, **characterized in that** the impurities are removed at a pressure of between 10⁵ Pa and 3.10⁶ pa.

11. Process according to one of Claims 1 to 10, **characterized in that** the said first adsorbent and second adsorbent are introduced into the same adsorber.

12. Process according to one of Claims 1 to 11, **characterized in that** a purified inert fluid containing at most approximately 1 ppb of impurities is recovered.

13. Process according to one of Claims 1 to 12, **characterized in that** the inert fluid is selected from argon, neon, krypton, xenon and helium.

14. Process according to one of Claims 1 to 13, **characterized in that** it comprises a step of regenerating at least one adsorbent with an inert gas and/or a reducing gas.
